# EUROPÄISCHE PATENTSCHRIFT

(11) **EP 1 285 241 B1**
(45) Veröffentlichungstag und Bekanntmachung des Hinweises auf die Patenterteilung: **05.05.2010**
(21) Anmeldenummer: 01943352.3
(22) Anmeldetag: 12.05.2001
(51) Int. Cl.: G01F 23/296

(54) **PIEZOELEKTRISCH ERREGBARES SCHWINGELEMENT**
PIEZOELECTRICALLY EXCITED OSCILLATING ELEMENT
ELEMENT OSCILLANT A EXCITATION PIEZO-ELECTRIQUE

(30) Priorität: 15.05.2000 DE 10023302
(43) Veröffentlichungstag der Anmeldung: 26.02.2003
(73) Patentinhaber: VEGA Grieshaber KG, 77709 Wolfach (DE)
(72) Erfinder: RAFFALT, Felix, 77756 Hausach (DE); FRICK, Adrian, 77709 Wolfach (DE); HARTER, Ingo, 77776 Schapbach (DE)
(74) Vertreter: Patentanwälte Westphal, Mussgnug & Partner
(86) Internationale Anmeldenummer: PCT/EP2001/005437
(87) Internationale Veröffentlichungsnummer: WO 2001/088490

(56) Entgegenhaltungen:
- EP-A- 0 810 423
- EP-A- 0 875 742
- EP-A- 0 985 916
- WO-A-92/21945

## Beschreibung

Die vorliegende Erfindung betrifft ein Schwingelement für ein Füllstandsmessgerät gemäß den Merkmalen des Oberbegriffs des Anspruchs 1. Derartige Schwingelemente werden insbesondere bei Füllstandsensoren eingesetzt, die z. B. in einen Behälter für ein fließfähiges oder fluidisierbares Medium, insbesondere eine Flüssigkeit, eingebaut werden. Die Schwingelemente sind je nach Pegelstand der Flüssigkeit mit dieser in Kontakt oder nicht. Die Schwingfrequenz der Schwingelemente sind durch den Kontakt mit der Flüssigkeit beeinflußt.

Schwingelemente für Füllstandsensoren sind in unterschiedlichen Ausgestaltungen bekannt. Sie umfassen im allgemeinen eine schwingfähige Membran, die die für den Kontakt mit der zu erfassenden Flüssigkeit vorgesehene Schwingkörper trägt, und einen Stapel von piezoelektrischen Elementen, dessen elektrisch angeregte Expansion und Kontraktion über einen Zugbolzen auf die Membran übertragen wird und diese sowie die Schwingkörper zu Schwingungen anregt.

Ein erstes Beispiel für ein solches Schwingelement ist in EP 0 810 423 A2 beschrieben. Bei diesem bekannten Schwingelement ist der Zugbolzen auf die Schwingmembran aufgeschweißt und ragt durch eine beabstandet zur Membran starr angebrachte Bodenplatte. Auf der Bodenplatte ist ein Stapel von ringförmigen Piezoelementen, durch Isolationsscheiben getrennt, konzentrisch um den Zugbolzen angeordnet. Den oberen Abschluß des Stapels bildet eine starre Druckscheibe, gegen die ein Schraubelement drückt, das am oberen Ende des Zugbolzens aufgeschraubt ist. Schwingungsantrieb und - erfassung erfolgen mit den gleichen Piezoelementen; die Signalführung zu dem Stapel der Piezoelemente erfolgt über zwei elektrische Leitungen.

Ein zweites bekanntes Schwingelement ist in WO 92/21945 dargestellt. Bei diesem Schwingelement ist die aus EP 0 810 423 A2 bekannte Bodenplatte durch eine Druckscheibe ersetzt, die einen unteren Abschluß des Stapels der Piezoelemente bildet und die auf eine an der Membran ringförmig in deren Randbereich geformte Schulter drückt. Schwingungsantrieb und - erfassung erfolgen hier jeweils durch getrennte Piezoelemente; es werden mindestens drei elektrische Zuleitungen eingesetzt.

Ein weiteres Schwingelement ist aus EP 0 875 742 A1 bekannt. Auch hier bildet ein Druckring einen unteren, der Membran zugewandten Abschluß des Piezoelementstapels. Anstatt auf eine Schulter drückt dieser Druckring auf an die Membran geformte Druckzapfen.

Schließlich offenbaren EP 0985 916 A1 und US-A-5943294 weitere Schwingelemente.

Ein Problem bei der Konstruktion von Schwingelementen für die Füllstandserfassung ist, daß eine äußerst starre Kopplung zwischen den Piezoelementen einerseits und der Membran bzw. den daran geformten Schwingkörpern andererseits erforderlich ist, damit eine Dämpfung der Bewegung der Schwingkörper durch das zu erfassende Medium zuverlässig auf die Piezoelemente rückwirkt und dort elektrisch erfaßt werden kann. Bei den derzeit bekannten Schwingelementen ist diese Anforderung gut erfüllbar, wenn die Schwingkörper, die üblicherweise als Gabelzinken ausgeformt sind, eine Länge von ca. 100 mm aufweisen. Bei einer Verkleinerung der Zinkenlänge auf beispielsweise 40 mm ist diese Anforderung jedoch nicht mehr hinreichend erfüllt.

Als Ursache für dieses Problem wird angesehen, daß die Verkürzung der Zinken zu einer Erhöhung der Resonanzfrequenz des Schwingelements führt. Im Fall der hier beispielhaft betrachteten Verkürzung von ca. 100 auf ca. 40 mm ergibt sich in etwa eine Verdreifachung der Schwingfrequenz. Diese führt zu einer deutlichen Entkopplung zwischen den piezoelektrischen Elementen, die die Schwingung antreiben, und den Gabelzinken, mit der Konsequenz, daß auch bei vollständig blockierten Gabelzinken der Antrieb vermindert mechanisch schwingfähig bleibt. Eine hinreichend starre Kopplung zwischen Antrieb und Gabelzinken ist jedoch zwingende Voraussetzung für die elektrische Messung der Gabelresonanzfrequenz anhand der in der Antriebseinheit abgreifbaren durch die Schwingung der Gabel in den Piezoelementen induzierten elektrischen Signale, hier als Detektionssignal bezeichnet. So lange die Schwingkörper von Luft umgeben sind und somit allenfalls schwach gedämpft werden, folgt ihre Schwingbewegung noch hinreichend getreu der Anregung durch die piezoelektrischen Elemente. Sobald sie jedoch mit einem zu erfassenden Behälterfüllgut in Kontakt kommen und die Dämpfung ihrer Schwingung dadurch zunimmt, kommt es zu verstärkten Abweichungen zwischen dem Detektionssignal und der tatsächlichen Resonanz des Systems von Schwingkörpern und Membran, und unerwünschte Oberwellenschwingungen treten auf. Überschreitet das Füllgut einen gewissen Viskositätswert, so ergibt sich schließlich eine zu starke Entkopplung des Verhaltens der Schwingkörper von der Anregung durch die Piezoelemente und somit ein vollständiger Funktionsverlust des Füllstandsensors. Die bekannten Konzepte piezoelektrisch angetriebener Schwingelemente eignen sich somit nicht für eine stärkere Miniaturisierung.

Ein weiteres Problem der herkömmlichen Schwingelemente ist die große Zahl der benötigten Einzelteile. Diese wirkt sich nicht nur auf die Herstellungskosten eines solchen Schwingelements aus, sie beeinträchtigt auch dessen Zuverlässigkeit. Insbesondere bei hohen Einsatztemperaturen des Schwingelements sind die einzelnen Teile verstärkten mechanischen Belastungen ausgesetzt, die zu einer vorzeitigen Alterung der Komponenten führen können.

Ein weiteres Problem herkömmlicher Schwingelemente ist, daß herstellungsbedingte mechanische Toleranzen einen von der Rotationslage des Piezoelementstapels relativ zu dem Zugbolzen abhängigen elektrisch/mechanischen Wirkungsgrad des Schwingelements ergeben. Um bei einer vorgegebenen elektrischen Erregeramplitude die durch die Bauart bestimmte maximale mechanische Schwingamplitude zu erreichen, ist es daher notwendig, bei der Montage den Piezoelementstapel um den Zugbolzen so lange schrittweise zu verdrehen, und danach jeweils testweise festzuziehen, bis die günstigste Position gefunden ist, in welcher der Piezoelementstapel dann arretiert verbleibt.

Aufgabe der Erfindung ist insbesondere, ein piezoelektrisch erregbares Schwingelement anzugeben, das sich besser als die herkömmlichen Schwingelemente für eine Miniaturisierung eignet. Weitere Vorteile des erfindungsgemäßen Schwingelements sind seine geringe Teilezahl und damit einhergehend, verringerte Herstellungskosten.

Die Aufgabe wird durch ein Schwingelement mit den Merkmalen des Anspruchs 1 gelöst.

Gemäß der Erfindung umfaßt der Stapel zwischen einem Druckring und einem die Membran berührenden Stützring zwei piezoelektrische Elemente, der Druckring und Stützring sind mit einem ersten Antriebspotential verbindbar, und eine zwischen den piezoelektrischen Elementen angeordnete Elektrode ist mit einem zweiten Antriebspotential verbindbar. Die Beschränkung auf zwei piezoelektrische Elemente führt einerseits zu einer Verringerung der Bauhöhe des Schwingelements und damit zu einer weiteren Versteifung seiner Kopplung an die Schwingkörper, andererseits kann, weil das erste Antriebspotential nur an einer Stelle des Stapels angelegt werden muß, auf eine temperaturempfindliche Leiterplatte an dem Schwingelement verzichtet werden, so daß es für Einsatztemperaturen von bis zu 200° C geeignet ist.

Eine elektrisch leitfähige Verbindung zwischen Druckring und Stützring wird in einfacher Weise über den Zugbolzen hergestellt. Eine vereinfachte Austauschmöglichkeit des Schwingelements wird dadurch erreicht, daß die piezoelektrischen Elemente, Druckring und Stützring vorzugsweise durch ein sie umgebendes Gehäuseteil zu einer Baueinheit zusammengefaßt sind, die von der Membran und dem Zugbolzen abnehmbar ist.

Weitere Merkmale und Vorteile der Erfindung ergeben sich aus der nachfolgenden Beschreibung eines Ausführungsbeispiels mit Bezug auf die beigefügte Figur.

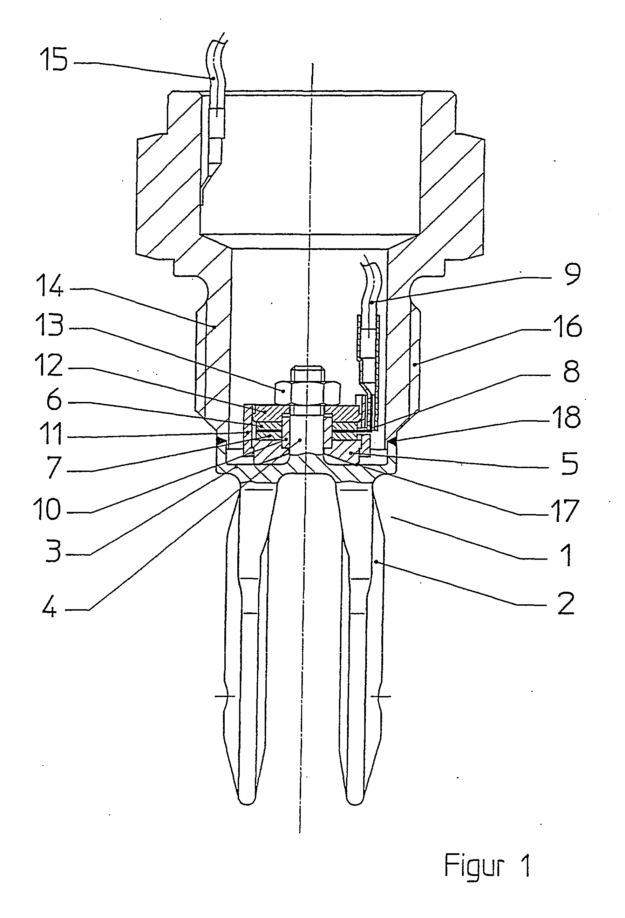

Figur 1 zeigt das erfindungsgemäße Schwingelemente in einem axialen Schnitt. Das Schwingelement umfaßt eine metallische Membran 3, die den Boden eines im wesentlichen becherförmigen metallischen Einbaugehäuses 14 bildet. Das Einbaugehäuse ist für die Montage in der Wand eines Behälters mit einem Außengewinde 16 versehen. Zwei an der Unterseite der Membran 3 geformte Schwingkörper in Form von Gabelzinken 2 stehen ins Innere des Behälters vor. Ein Zugbolzen 4 ragt von der Oberseite der Membran 3 aus ins Innere des Einbaugehäuses 14. Eine Antriebs-Baueinheit ist auf den Zugbolzen 4 aufgesteckt und durch eine an dem Zugbolzen 4 verschraubte Mutter 13 gegen die Membran 3 gepreßt.

Die Antriebs-Baueinheit ist ein Stapel von mehreren ringförmigen Elementen, nämlich einem Stützring 5, der in direktem Kontakt mit der Membran 3 ist, einem unteren Piezoelement 7, einer Elektrode 8, einem oberen Piezoelement 6 und einem Druckring 12, der die Druckkraft der Mutter 13 aufnimmt und auf die gesamte Oberfläche des oberen Piezoelements 6 gleichmäßig verteilt. Der Druckring 12 und der Stützring 5 bestehen aus Metall und stellen gleichzeitig die zur Elektrode 8 komplementären Elektroden der zwei Piezoelemente 6, 7 dar.

Die inneren Seitenflächen der Piezoelemente 6, 7 sind durch eine Isolationshülse 10 elektrisch gegen den Zugbolzen 4 isoliert. Radial nach außen sind sie von einem Antriebsgehäuse 11 umgeben, das radiale Vorsprünge des Stützrings 5 und des Druckrings 12 umgreift und so die genannten Elemente 5, 6, 7, 8, 12 zu einer Baueinheit zusammenfaßt. Diese Baueinheit ist im Vergleich zu herkömmlichen Antriebseinheiten mit einer größeren Zahl von piezoelektrischen Elementen sehr flach aufgebaut und besteht nur aus wenig Einzelteilen. Die Zahl der steifigkeitsvermindernden Oberflächenübergänge ist daher gering. Da die Kraft des Antriebs direkt über den Stützring 5 in die Membran 3 eingekoppelt wird, ergibt sich eine geringe Wegstrecke zwischen den Orten der Einwirkung des Stützrings 5 auf die Membran 3 im radial äußeren Bereich von dessen Stirnseite 17 und dem Zugbolzen 4. Durch den zum Zugbolzen 4 konzentrischen Kontakt des Stützrings 5 mit der Membran ergibt sich eine steife Kopplung.

Der Zugbolzen 4 ist an die Membran 4 nicht geschweißt, sondern einstückig, z. B. durch spanende Bearbeitung wie etwa Drehen, gemeinsam mit der Membran 3 geformt. Deshalb kann der Übergangsquerschnitt vom Zugbolzen 4 zur Membran 3 bei gleicher Festigkeit kleiner ausgeführt werden, als dies bei einer Schweißverbindung zwischen beiden möglich ist, außerdem werden durch eine Schweißung bedingte materialverhärtende Gefügeveränderungen an der Membran 3 in der Nähe des Zugbolzens 4 vermieden. Dies ist wichtig, weil eine Versteifung der Membran 3 selber unerwünscht ist. Sie soll der einzige biegefähige Bestandteil in dem gesamten Schwingelement sein, alle anderen Bestandteile müssen im Vergleich zu ihr eine deutlich höhere Biegesteifigkeit aufweisen. Die Membran 3 stellt die Kraftübertragungsschnittstelle zwischen dem Gabelzinken 2 und der Antriebseinheit dar. Jede Biegung eines anderen Bauteils fördert die Entkopplung von Gabelzinken 2 und Antriebseinheit und ist deshalb unerwünscht.

Die Piezoelemente 6, 7 werden simultan zum Antrieb und zur Erfassung der Schwingung eingesetzt, wie z. B. in EP 0810 423 A2 beschrieben. Auf diese Weise verringert sich nicht nur die Anzahl der Piezoelemente, sondern auch die der benötigten Kontaktierungselektroden.

Ein erstes Antriebspotential wird den Piezoelementen 6, 7 über eine erste Antriebsleitung 9 zugeführt, die mit der zwischen ihnen eingeschlossenen Elektrode 8 verbunden ist. Da nur eine einzige Anschlußelektrode 8 benötigt wird, kann an dieser die Antriebsleitung 9 direkt befestigt sein. Spezielle Kontaktierungsleiterplatten sind nicht erforderlich, so daß das Schwingelement für hohe Einsatztemperaturen von bis zu 200° C geeignet ist.

Das zweite Antriebspotential wird an die Außenseite der Piezoelemente 6, 7 über den Stützring 5 bzw. den Druckring 12 angelegt. Der Druckring 12 ist über die Mutter 13 und den Zugbolzen 4 mit der Membran 3 leitfähig verbunden, die auch den Stützring 5 kontaktiert. Die Membran wiederum ist über eine Schweißverbindung 18 leitfähig mit dem Einbaugehäuse 14 verbunden, an das eine zweite Antriebsleitung 15 angeschlossen ist. Eine gegebenenfalls erforderliche Potentialtrennung in Bezug auf den Behälter, in den das Einbaugehäuse 14 eingeschraubt ist, kann in einer (nicht dargestellten) Auswerteelektronik mit Hilfe eines DC-Wandlers erfolgen und hat keine Auswirkungen auf Schwingungseigenschaften.

Die erste Antriebsleitung 9 kann zu mindest auf der Länge, auf der sie sich durch das Einbaugehäuse 14 erstreckt, ungeschirmt sein, weil das mit dem zweiten Antriebspotential beaufschlagte Einbaugehäuse 14 bereits eine koaxiale Abschirmung für die erste Antriebsleitung 9 darstellt. Dies ist insbesondere bei Bauformen des Sensorelements vorteilhaft, bei denen der Ort der Befestigung des Einbaugehäuses in der Behälterwand, hier das Außengewinde 16, und die Membran 3 durch ein in den Behälter eintauchendes metallisches Verlängerungsrohr von beträchtlicher Länge getrennt sind. Da dieses Rohr bereits als elektromagnetische Abschirmung wirkt, kann auf einer unter Umständen mehrere Meter lange hochtemperaturtaugliche, kostspielige Koaxialverbindungsleitung innerhalb des Rohres verzichtet werden.

Die geringe Zahl von Teilen des Antriebselements macht dieses besonders geeignet für den Betrieb bei hohen Temperaturen, z. B. bei 200° C. Da die zweite Antriebsleitung 15 im Bereich der Behälterwand bzw. außerhalb des Behälters kontaktiert werden kann, sind hier keine besonderen Schutzvorkehrungen notwendig, um eine Hochtemperaturtauglichkeit der Verbindung zu gewährleisten. Allein die erste Antriebsleitung 9 ist mit der Elektrode 8 im Hochtemperaturbereich in der Umgebung der Membran 3 kontaktiert. Dieser Kontakt wird vorteilhafterweise durch Punktschweißung oder einer Crimpverbindung hergestellt, da eine Lötverbindung für solche Einsatztemperaturen nicht geeignet ist.

Durch die Fertigung von Membran 3 und Zugbolzen 4 aus einem Stück mittels Drehbearbeitung ist ein Schiefstehen des Zugbolzens 4 ebenso unmöglich wie eine Position außerhalb des Mittelpunkts der Membran 3. Gefügeveränderungen im Stahl der Membran mit undefinierter Ausbreitung sind ebenfalls ausgeschlossen, da ein Schweißvorgang auf der schwingfähigen Membranfläche entfällt. Dies und der sehr flache Aufbau der Antriebseinheit sowie der Wegfall einer Vielzahl von toleranzbehafteten Bauteilen tragen dazu bei, daß bei dem erfindungsgemäßen Schwingungselement der Wirkungsgrad unabhängig von der Drehorientierung der Antriebsbaueinheit relativ zum Zugbolzen ist. Der bisher erforderliche Arbeitsgang der Drehausrichtung der Antriebsbaueinheit kann daher bei der Fertigung des Schwingelements komplett entfallen. Ein Austausch der Antriebsbaueinheit ist schnell und ohne Schwierigkeiten möglich.

## Patentansprüche

1. Schwingelement für ein Füllstandsmessgerät mit einer schwingfähigen Membran (3), einer innerhalb eines metallischen Einbaugehäuses (14) angeordneten Antriebseinheit mit einem Stapel von piezoelektrischen Elementen (6, 7) und einem mit der Membran (3) verbundenen Zugbolzen (4) zum Anpressen der piezoelektrischen Elemente (6, 7) an die Membran (3), wobei der Stapel zwischen einem Druckring (12) und einem die Membran berührenden Stützring (5) angeordnet ist und piezoelektrische Elemente (6, 7) umfasst, wobei der Druckring (12) und der Stützring (5) jeweils aus Metall bestehen und die Membran (3) als Kraftübertragungsschnittstelle zwischen Gabelzinken (2) und Antriebseinheit dient, und leitfähig mit dem Einbaugehäuse (14) verbunden ist,
**dadurch gekennzeichnet, dass** zwei piezoelektrische Elemente vorgesehen sind, dass der Druckring (12) und der Stützring (5) als Elektrode jeweils ein anderes der piezoelektrischen Elemente (6, 7) flächig berühren sowie mit einem ersten Antriebspotential, das über eine erste Anschlussleitung (15) an das Einbaugehäuse (14) angeschlossen ist, verbunden sind und eine zwischen den piezoelektrischen Elementen (6, 7) angeordnete Elektrode (8) mit einem über eine zweite Anschlussleitung (9) bereitgestellten zweiten Antriebspotential verbindbar ist.

2. Schwingelement nach dem Anspruch 1,
**dadurch gekennzeichnet, dass** der Zugbolzen (4) einstückig mit der Membran (3) ausgebildet ist.

3. Schwingelement nach Anspruch 2,
**dadurch gekennzeichnet, dass** der Stützring (5) und der Druckring (12) über den Zugbolzen (4) elektrisch leitend verbunden sind.

4. Schwingelement nach Anspruch-.2 oder 3,
**dadurch gekennzeichnet, dass** die piezoelektrischen Elemente (6, 7), Druckring (12) und Stützring (5) durch ein sie umgebendes Gehäuseteil (11) zu einer Baueinheit zusammengefasst sind, die von der Membran (3) und dem Zugbolzen (4) abnehmbar ist.

5. Schwingelement nach einem der Ansprüche 1 bis 4,
**dadurch gekennzeichnet, dass** der Stützring (5) die Membran (3) auf einem radial äußeren Bereich seiner der Membran (3) zugewandten Stirnseite (17) berührt.

6. Schwingelement nach einem der vorhergehenden Ansprüche,
**dadurch gekennzeichnet, dass** die Gabelzinken (2) eine Länge von 20 bis 70, vorzugsweise ca. 40 mm, aufweisen.

## Claims

1. Oscillating element for a filling level measurement device, comprising an oscillating diaphragm (3), a drive element which is arranged within a metal installation housing (14) and which comprises a stack of piezoelectric elements (6, 7), and a tie bolt (4) which is connected to the diaphragm (3) and is intended to press the piezoelectric elements (6, 7) against the diaphragm (3), wherein the stack is arranged between a pressure ring (12) and a support ring (5), the latter making contact with the diaphragm, and comprises piezoelectric elements (6, 7), wherein the pressure ring (12) and the support ring (5) are in each case made of metal and the diaphragm (3) serves as the force transfer interface between fork prongs (2) and the drive unit and is conductively connected to the installation housing (14), **characterised in that** two piezoelectric elements are provided, and **in that** the pressure ring (12) and the support ring (5) as electrodes each make flat contact with a different piezoelectric element (6, 7) and can be connected to a first drive potential which is applied to the installation housing (14) via a first connection line (15), and an electrode (8) arranged between the piezoelectric elements (6, 7) can be connected to a second drive potential which is provided via a second connection line (9).

2. Oscillating element according to claim 1, **characterised in that** the tie bolt (4) is formed in one piece with the diaphragm (3).

3. Oscillating element according to claim 2, **characterised in that** the support ring (5) and the pressure ring (12) are connected in an electrically conductive manner via the tie bolt (4).

4. Oscillating element according to claim 2 or 3, **characterised in that** the piezoelectric elements (6, 7), the pressure ring (12) and the support ring (5) are brought together by a surrounding housing part (11) to form a structural unit which can be detached from the diaphragm (3) and the tie bolt (4).

5. Oscillating element according to one of claims 1 to 4, **characterised in that** the support ring (5) makes contact with the diaphragm (3) on a radially outer region of its end side (17) facing towards the diaphragm (3).

6. Oscillating element according to one of the preceding claims, **characterised in that** the fork prongs (2) have a length of 20 to 70 mm, preferably approximately 40 mm.

## Revendications

1. Elément oscillant pour un appareil de mesure de niveau de remplissage comportant une membrane (3) susceptible d'osciller, un élément d'entraînement installé dans un boîtier de montage (14) métallique, et ayant une pile d'éléments piézo-électriques (6, 7) ainsi qu'un goujon de traction (4) relié à la membrane (3) pour presser les éléments piézo-électriques (6, 7) contre la membrane (3),
la pile comprenant des éléments piézo-électriques (6, 7), étant installée entre une bague de pression (12) et une bague d'appui (5) touchant la membrane,
la bague de pression (12) et la bague d'appui (5) sont chacune en métal et la membrane (3) sert d'interface de transmission de force entre les dents de fourche (2) et l'unité d'entraînement et la membrane est reliée en conduction au boîtier de montage (14),
**caractérisé en ce que**
la bague de pression (12) et la bague d'appui (5) comme électrode, touchent chacune en surface un autre des éléments piézo-électriques (6, 7) et elles sont reliées au premier potentiel d'entraînement transmis par une ligne (15) au boîtier de montage (14), et une seconde électrode (8) prévue entre les éléments piézo-électriques (6, 7) est reliée à un second potentiel d'entraînement par l'intermédiaire d'une seconde conduite de branchement (9).

2. Elément oscillant selon la revendication 1,
**caractérisé en ce que**
le goujon de traction (4) est en une seule pièce avec la membrane (3).

3. Elément oscillant selon la revendication 2,
**caractérisé en ce que**
la bague d'appui (5) et la bague de pression (12) sont reliées électriquement par le goujon de traction (4).

4. Elément oscillant selon la revendication 2 ou 3,
**caractérisé en ce que**
les éléments piézo-électriques (6, 7), la bague de pression (12) et la bague d'appui (5) sont réunis en un ensemble par une partie de boîtier (11) qui les entoure, et cet ensemble peut être enlevé de la membrane (3) et du goujon de traction (4).

5. Elément oscillant selon l'une des revendications 1 à 4,
**caractérisé en ce que**
la bague d'appui (5) touche la membrane (3) sur une zone radialement à l'extérieur de sa face frontale (17) tournée vers la membrane (3).

6. Elément oscillant selon l'une des revendications précédentes,
**caractérisé en ce que**
les dents de fourche (2) ont une longueur comprise entre 20 mm et 70 mm et de préférence une longueur de l'ordre de 40 mm.
